# EUROPEAN PATENT SPECIFICATION

(11) **EP 4 150 250 B1**
(45) Date of publication and mention of the grant of the patent: **22.04.2026**
(21) Application number: 21803133.4
(22) Date of filing: 13.05.2021
(51) Int. Cl.: F21V 21/005, F21V 23/06, F21S 4/28, H02G 3/06

(54) **A SELF-TENSIONING CONNECTOR**
SELBSTSPANNENDER VERBINDER
RACCORD AUTOTENDEUR

(30) Priority: 14.05.2020 AU 2020901546
(43) Date of publication of application: 22.03.2023
(73) Proprietor: Darkon Pty Ltd, Collingwood, Victoria 3066 (AU)
(72) Inventor: PHILLIPS, Dean Llewllyn, Collingwood, Victoria 3066 (AU); COUCH, Dominic Matthew, Kalkallo, Victoria 3064 (AU)
(74) Representative: Zacco Sweden AB
(86) International application number: PCT/AU2021/050448
(87) International publication number: WO 2021/226673

(56) References cited:
- EP-A1- 0 870 981
- EP-A1- 3 540 305
- EP-A1- 3 543 603
- EP-A2- 2 463 968
- CN-A- 110 566 855
- US-A1- 2007 292 205
- US-A1- 2018 112 856

## Description

### FIELD OF THE INVENTION

The present invention relates to a self-tensioning connector for coupling two housings in a linear relationship and a lighting system comprising the self-tensioning connector.

### BACKGROUND OF THE INVENTION

Architectural lighting design is a combination of architecture, interior design and electrical engineering that is concerned with the design of lighting products. Specifically, the field is concerned with designing lighting products which serve the needs of humans allowing them to see clearly without discomfort. Architecture lighting design is also used to complement the features of a room to provide an aesthetic benefit that enhances the physical features of the room.

There are many types of lighting products available for architectural lighting design, for example: recessed lighting; track lighting; and profile lighting.

Profile lighting is becoming an increasingly popular design of lighting product due to its versatility, i.e. not being confined to a fixed length. Profile lighting consists of modular, elongate housings forming recesses into which lighting elements (such as an LED) can be fitted. Coloured or textured lenses can then be fitted to the housings to modify the output from the lighting elements. The modular housings are typically joined end-to-end to provide a continuous lighting product that can be extended by an indefinite length.

A problem with profile lights is that the joints between the housings are seldom fitted correctly. This results in gaps between the housings. As such, light can pass through these gaps causing in an aesthetic fault known as "light bleed" - a criterion which some lighting products are assessed for. If too much light bleed occurs, the lighting product gives a poor visual aesthetic to the space to be illuminated and can fail the assessment. Furthermore, tradesmen often apply filler to the joint to mask the gaps between the extrusions. However, this can be ineffective at preventing light bleed and may damage to the lighting product.

EP 3 543 603 A1 describes a connector for coupling housings of two adjacent lighting devices.

The present invention was conceived with these shortcomings in mind.

### SUMMARY OF THE INVENTION

The invention provides a self-tensioning connector for coupling mating ends of a first housing and a second housing in a linear configuration, the connector providing first and second cooperating subassemblies for fixedly mounting to the first and second housings respectively, the first subassembly comprising a bracket mountable to the first housing, the bracket having a male engagement portion configured to project from the mating end of the first housing when mounted thereto, the second subassembly comprising: a plate mountable to the second housing, a moveable carriage supported on the plate, the carriage having a first surface orientated toward the plate, and a second surface opposing the first surface, the carriage having a female engagement portion configured to project from the mating end of the second housing to receive and capture the male engagement portion to align the first and second housings; and a latch mounted on and biased against the movable carriage in a first tensioned configuration, the latch providing an anchor configured to extend through an aperture in the carriage and protrude from the first surface of the carriage, wherein engagement of the male and female engagement portions aligns the first and second subassemblies thereby aligning the first and second housings, and movement of the two housings towards one another brings the first housing into contact with the anchor releasing the anchor from the aperture and allowing the biasing means to force the carriage away from the mating end of the second housing to adopt an engaged configuration drawing the mating ends of the first and second housings together.

Movement of the carriage relative to the plate may retract both the male and the female engagement portions into the second housing thereby tensioning the mating end of the first housing against the mating end of the second housing.

The latch may comprise a base having a pair of arms projecting from the base, and an anchor located at an end of each of the respective arms which is distal from the base. The female engagement portion may comprise a pair of apertures configured to receive a portion of each respective anchor. Each anchor may provide a cam surface adjacent the respective aperture to allow for release of the anchor from the aperture in a first direction and to prevent release of the anchor from the aperture in a second direction.

The latch may be biased against the movable carriage by a resilient member. The resilient member may be at least one of a compression spring; a compressible element; a helical compression spring; and a plurality of compressible elements.

The carriage, the latch and the plate may be coaxially aligned about a longitudinal axis. The carriage may comprise a first and a second axle mount spaced apart and aligned with the longitudinal axis.

The plate may comprise an elongate aperture for receiving the first axle mount of the carriage therethrough. A first end of the plate may include an intermediate axle mount and a translatable axle extends through each of the first, second and intermediate mounts.

The axle may also be slidably mounted to the carriage and the housing.

The compressible spring may be mounted on the axle between the first axle mount and the intermediate axle mount such that compression and expansion of the compressible spring varies the location of the carriage relative to the plate.

The latch may be movably mounted to the axle to transition between a first and a second position; the first position wherein the anchors of the latch are engaged with the carriage; and the second position wherein the anchors of the latch are disengaged from the carriage. However, in some embodiments an end of the axle may be fixedly mounted to the base of the latch.

A latch biasing member may bias the latch towards the first position. The latch biasing member may be a resilient member supported between the arms of the latch. The resilient member may be a leaf spring. The latch biasing member may be restrained by the axle.

The female engagement portion may be an opening for receiving the male engagement portion. The male engagement portion may be a tongue having a peripheral lip for increasing contact area between the tongue and the opening of the female engagement member. The tongue may taper, narrowing towards a distal end to locate the tongue within the opening of the female engagement member.

When the self-tensioning connector is used to join profile lighting, the first and second housings may be extruded channels (generally c-shaped) forming a recess into which lighting elements (such as an LED) can be housed. The first subassembly is mounted, internally of the first extruded channel, to the mating end, and the second subassembly is mounted, internally of the second extruded channel, to the mating end. The two channels are aligned and tensioned end-to-end to result in a lighting product that can be continuously extended to a predetermined length. A pair of lenses may then be fitted into or across the recess of the channels to modify the output from the lighting elements therein.

A guideway may be formed within each of the first and second housings to receive either of the first or second subassemblies. The guideway may be dimensioned to guide and receive the head of the carriage to align the first and second housings when in proximity. The guideway may be a channel within a base of the housing. The channel may be an extruded form, formed as the housing is extruded. The channel may be machined into the form of the housing after the housing is extruded.

In a second aspect, the invention provides a lighting system comprising a self-tensioning connector as described herein.

In a third aspect, the invention provides a lighting system comprising: a first housing and a second housing, each housing having an open cavity for receiving at least one light source, a lens, and at least one of a first and second subassembly of a self-tensioning connector for coupling mating ends of the first and second housings in a linear configuration, wherein the first subassembly comprises a bracket mounted to the first housing, the bracket having a male engagement portion configured to project from the mating end of the first housing when mounted thereto; and the second subassembly comprises: a plate mountable to the second housing; a moveable carriage supported on the plate, the carriage having a first surface oriented toward the plate, and a second surface opposing the first surface, the carriage having a female engagement portion configured to project from a mating end of the second housing when mounted thereto to receive and capture the male engagement portion to align the first and second housings; and a latch mounted on and biased against the movable carriage in a first tensioned configuration, the latch providing an anchor configured to extend through an aperture in the carriage and protrude from the first surface of the carriage, wherein engagement of the male and female engagement portions aligns the first and second subassemblies thereby aligning the first and second housings, and movement of the two housings towards one another brings the first housing into contact with the anchor releasing the anchor from the aperture and allowing the biasing means to force the carriage away from the mating end of the second housing to adopt an engaged configuration drawing the mating ends of the first and second housings together.

The lens may comprise: an open channel with a light transmitting pane, the open channel resiliently engaged in the open cavity of the housing. The open channel may comprise a pair of side walls that extend into the cavity and terminate in close proximity to the light source.

The lens may be made from a first and a second material. The first material may be different to the second material in at least one of the following characteristics: colour, transparency, translucency, and opacity. The lens may be made from the first material. At least a position of the side walls may be made from the second material.

The side walls may comprise at least one attachment member for engaging with an inner surface of the cavity. The inner surface of the cavity may provide cooperating features for engaging with the attachment members.

The lens may be entirely housed within the cavity.

The side walls of the lens may be oriented to direct light from the light source towards the light transmitting pane.

The opposing ends of each of the first and the second housings may be either recessed or protruding to interleave with one another on engagement.

Each housing may comprise a base and a pair of side walls, wherein either of the base or the pair of side walls of a first end of the housing is recessed, and the other of the base or the pair of side walls of the second end of the housing protrudes, such that a through-thickness lap joint is formed between the first and second housings.

### BRIEF DESCRIPTION OF THE DRAWINGS

Embodiments of the invention are illustrated by way of example, and not by way of limitation, with reference to the accompanying drawings, of which:
Figure 1 is a perspective view of a self-tensioning connector according to one embodiment of the invention, aligned with a first and a second housing to form a lighting connection system.
Figure 2A is a perspective view of the two housings from Figure 1 having the first and second subassemblies mounted therein, respectively, aligned, prior to joining.
Figure 2B is a perspective view of the two housings of Figure 2A joined together.
Figure 3 is a perspective view of a self-tensioning connector according to one embodiment of the invention.
Figure 4 is perspective, view of a first subassembly of the connector of Figure 3.
Figure 5 is perspective, exploded, view of a second subassembly of the connector of Figure 3.
Figure 6 is a perspective view of a mounting plate of the second subassembly.
Figure 7 is a perspective view of a moveable carriage of the second subassembly.
Figure 8 is a perspective view of a latch of the second subassembly.
Figure 9 is a perspective view of a biasing member of the latch of the second subassembly.
Figures 10-13 are perspective views, illustrating a method of using the self-tensioning connector to couple two housings in an end-to-end relationship, wherein:
   Figure 10A is a top perspective view of the ends of the two housings aligned prior to the male engagement portion being received and captured within the female engagement portion;
   Figure 10B is an enlarged view of the male and female engagement portions encircled in Figure 10A;
   Figure 11A is a top perspective view of the two housings, the male engagement portion received and captured within the female engagement portion;
   Figure 11B is an enlarged view of the male and female engagement portions encircled in Figure 11A;
   Figure 12A is a top perspective view of the two housings, the male engagement portion further engaged with the female engagement portion to initiate the release the anchor from the aperture;
   Figure 12B is an enlarged view of the male and female engagement portions encircled in Figure 12A;
   Figure 13A is a top perspective view of the two housings locked in an end-to-end configuration;
   Figure 13B is an enlarged view of the male and female engagement portions encircled in Figure 13A;
Figure 14 is a top perspective view of a housing having a C-Shaped cross-section, illustrating a first protruding end and a second recessed end for cooperatively engaging similar housings when the ends of the housings are mated together.
Figure 15 is a top view of the housing of Figure 14.
Figure 16 is a perspective view of a lens for sealing the housing of Figure 14.
Figure 17 is a cross-sectional view of the lens of Figure 16, illustrating connection members thereof.
Figure 18 is a side view of the lens of Figure 17 illustrating an elongate constant section.
Figure 19A is a cross-sectional view of a lighting fixture including the lens of Figure 17 installed within the housing of Figure 14, illustrating the path of light from a light source through the lens.
Figure 19B is a cross-sectional view of the housing of the lighting fixture illustrated in Figure 19A.
Figure 20A is a cross-sectional view of a lighting fixture according to another embodiment of the invention.
Figure 20B is a cross-sectional view of a housing of the lighting fixture illustrated in Figure 20A.

### DETAILED DESCRIPTION

The invention may be embodied in many different forms and should not be construed as being limited to the embodiments described below. The description includes reference numerals that identify the features described in the figures. However, to maintain clarity of the figures, all of the reference numerals have not been included in each of the figures.

While the self-tensioning connector of the invention is described herein in reference to installing housings of a profile lighting system, it is contemplated that the self-tensioning connector can be applied to other forms of housing and other products where a tensioning between the housings to eliminate or at least reduce gaps therebetween is required. For example, piping, ducting, conduits, and other forms of strip lighting installation.

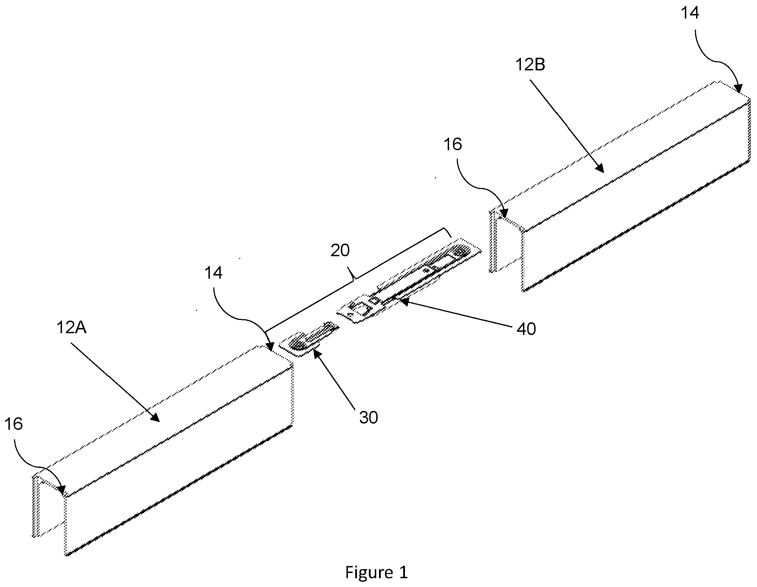

The invention illustrated in Figures 1 to 16 is directed to a self-tensioning connector 20 for coupling mating ends of a first housing 12A and a second housing 12B in a linear configuration, the connector 20 providing first 30 and second 40 cooperating subassemblies for fixedly mounting to the first 12A and second 12B housings respectively, the first subassembly 30 comprising a bracket 31 mountable to the first housing 12A, the bracket 31 having a male engagement portion 36 configured to project from the mating end 14 of the first housing 12A, the second subassembly 40 comprising: a plate 500 mountable to the second housing 12B, a moveable carriage 600 supported on the plate, the carriage having a first surface 620 oriented toward the plate 500, and a second surface 625 opposing the first surface 620, the carriage 600 having a female engagement portion 610 configured to project from the mating end 16 of the second housing 12B when mounted thereto to receive and capture the male engagement portion 36 to align the first 12A and second 12B housings; and a latch 700 mounted on and biased against the movable carriage 600 in a first tensioned configuration, the latch 700 providing an anchor 725A, 725B configured to extend through an aperture 635A, 635B in the carriage 600 and protrude through the carriage 600, wherein as the two housings 12A, 12B are drawn together, contact between the anchor 725A, 725B and the first housing 12A releases the anchor 725A, 725B from the aperture 635A, 635B allowing the biasing means to force the carriage 600 away from the mating end 16 of the second housing 12B to adopt an engaged configuration thereby drawing the mating end 14, 16 of the first 12A and second 12B housings together.

Figure 1 shows the self-tensioning connector 20 for coupling two housings in the context of a lighting system.

Each housing 12A, 12B is an extruded c-shaped channel formed in lengths. The channel forms a recess in which componentry of the lighting system can be mounted. However, it is also envisaged that the housing may be formed from extrusions with H-shaped profiles. H-shaped profiles form two recesses in which componentry of the lighting system can be mounted.

The length of the housing can be 0.03-6.5 metres. However, the housings can be cut to any length under 6.5 meters. The depth of the channel is typically between 40-150 mm. The width of the channel is typically between 30-200mm. The thickness of the channel is typically between 1-5mm.

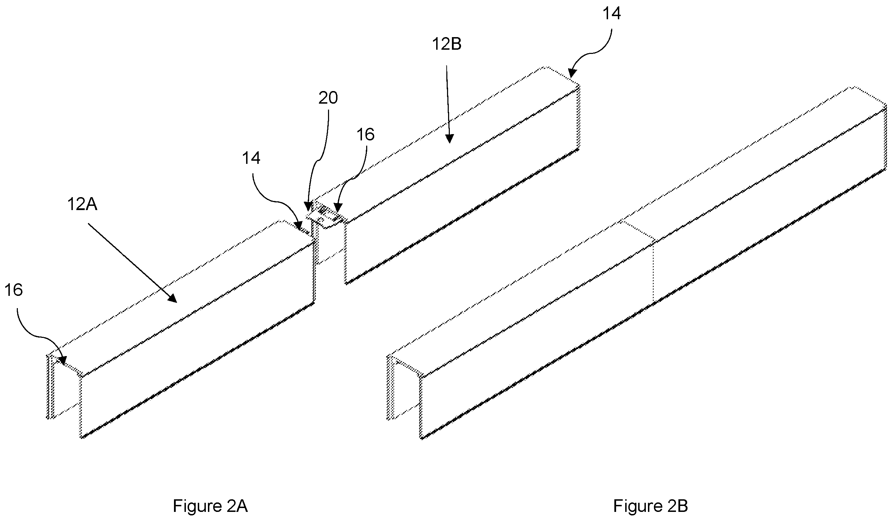

Figures 1 and 2 illustrate the two housings in various stages of connection, the two housings 12A, 12B of a lighting system, in an end-to-end relationship. Each of the housings 12A, 12B having mating ends 14, 16, respectively.

Figure 1 illustrates the two housings 12A, 12B and the self-tensioning connector 20 in alignment, and prior to connection.

Figure 2A shows the first housing 12A and second housing 12B in an unconnected state and Figure 2B shows the first 12A and second 12B housings in a connected state.

Figure 1 shows an exploded view of the lighting connection system, wherein the self-tensioning connector 20 is housed within the ends of the first and second housings 12A, 12B and draws the ends 14, 16 of the housings into abutment with each other under tension. The self-tensioning connector 20 consists of a first connector subassembly 30 and a second connector subassembly 40. The first connector subassembly 30 is housed within, and mounted to, a mating end 14 of the first housing 12A and the second connector subassembly 40 is housed within, and mounted to, the mating end 16 of the second housing 12B.

The self-tensioning connector 20 will be described in more detail in the sections that follow.

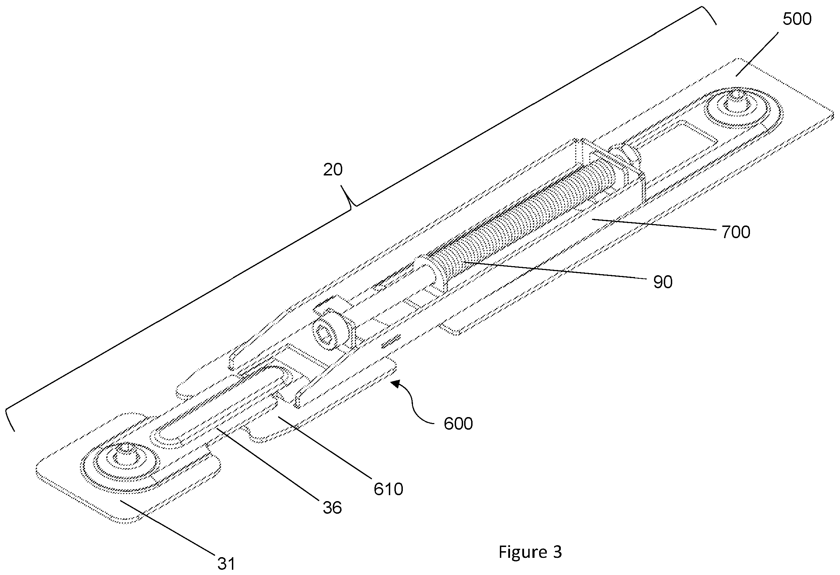

Figure 3 illustrates the first connector subassembly 30 and the second connector subassembly 40 of the self-tensioning connector 20 without any housing connected thereto.

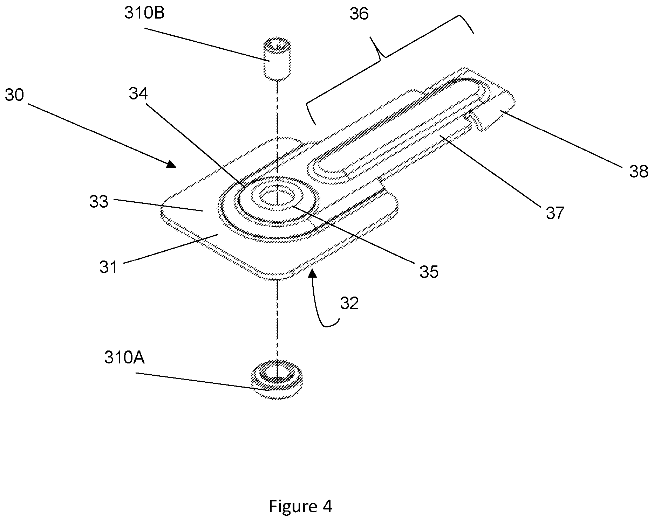

Figure 4 illustrates the first connector subassembly which comprises a bracket 31 for rigidly affixing the first subassembly 30 to the first housing 12A. The bracket 31 can be bolted, screwed, riveted or otherwise connected to a portion of the first housing 12A.

The bracket has a bottom surface 32 and a top surface 33. A domed section 34 projects from the top surface 33 and forms a recess on the bottom surface 32. The recess is sized to receive a first fastener 310A. The domed section 34 has a central bolt hole 35 that is sized to receive a second fastener 310B. The first and second fasteners 310A, 310B interact to mount the first connector subassembly 30 to the first housing 12A.

A male engagement portion 36 projects from the domed section 34 such that when the first connector subassembly 30 is mounted to the first housing 12A, the male engagement portion 36 protrudes from the first housing 12A (as shown in Figure 2A). The male engagement portion 36 comprises a tongue 37 with a curved peripheral lip 38 for increasing the surface area of the tongue 37. The tongue 37 tapers in the direction away from the bracket 31 towards the distal end of the tongue 37. The tongue 37 and lip 38 facilitate engagement with the female engagement portion 610 (see Figure 3).

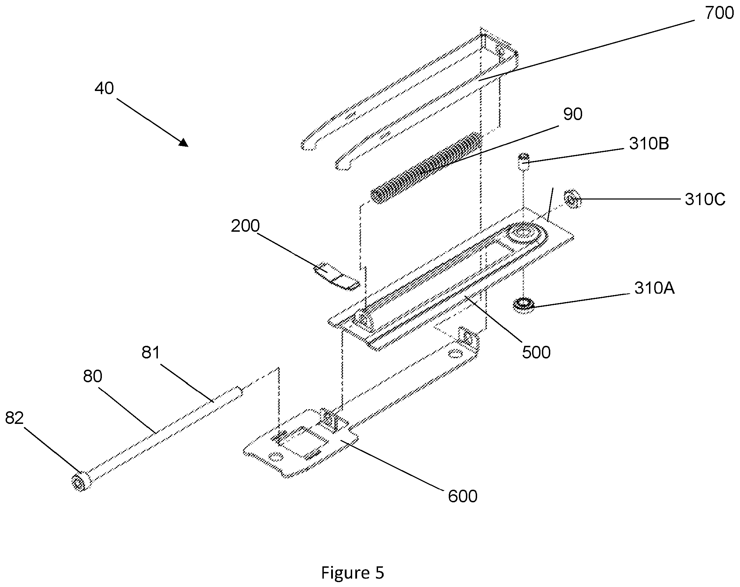

Figure 5 shows an exploded view of the second connector subassembly 40. The second connector subassembly 40 consists of a mounting plate 500; a movable carriage 600; a latch 700; an axle 80 defined by an elongate shank 81 terminating at a flange 82; a carriage biasing member, illustrated as a compression spring 90; an anchor biasing member, illustrated as a leaf spring 200 and various fastening means 310A-C. Each of these components will be described in detail in reference to Figures 5-9.

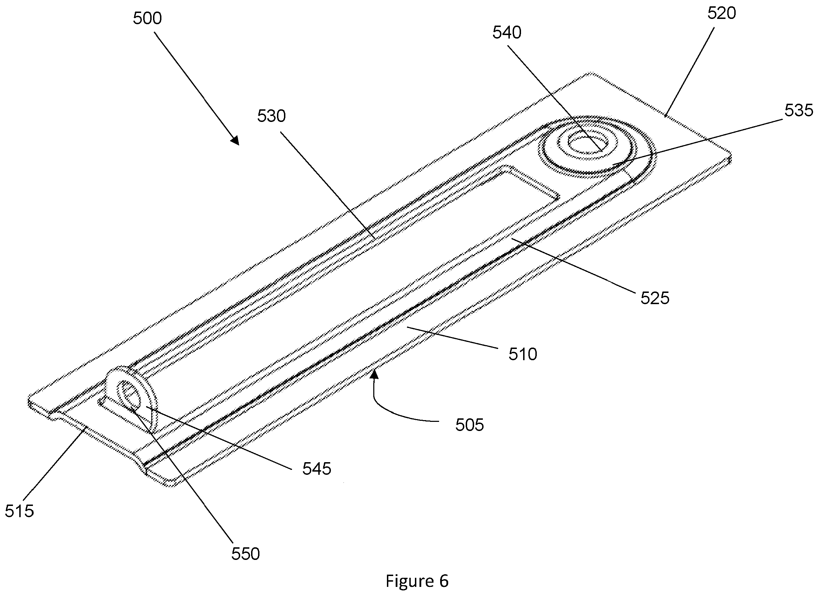

Figure 6 shows a perspective view of a mounting plate 500 which forms part of the second subassembly 40. The plate 500 mounts the second subassembly 40 to the second housing 12B. The plate 500 can be formed from a pressed steel sheet having a generally rectangular profile defining a bottom surface 505, a top surface 510, a first end 515, and a second end 520. Between the first and second ends 515, 520, there is a raised central portion 525 that extends substantially the entire length of the plate 500.

The mounting plate 500 is installed on the second housing 12B with the bottom surface 505 oriented toward the second housing 12B. When installed on the second housing 12B, the raised central portion 525 forms a gap, between the second surface 505 and the second housing 12B, for the carriage 600 to slide within. Between the first and second ends 515, 520, the raised central portion 525 has a rectangular slot 530.

Toward the second end 520, the raised central portion 525 has a domed section 535 surrounding a bolt hole 540. The domed section 535 projects from the top surface 510 and forms a recess on the bottom surface 505. The recess is sized to receive a first fastener 310A. The bolt hole 540 is sized to receive a second fastener 310B. The first and second fasteners 300A, 310B connect to mount the plate 500 to the second housing 12B.

Toward the first end 515 of the plate 500, the raised central portion 525 has an intermediate axle mount 545 with a centrally located through hole 550. The through hole 550 is sized to slidably receive the shank 81 of the axle 80.

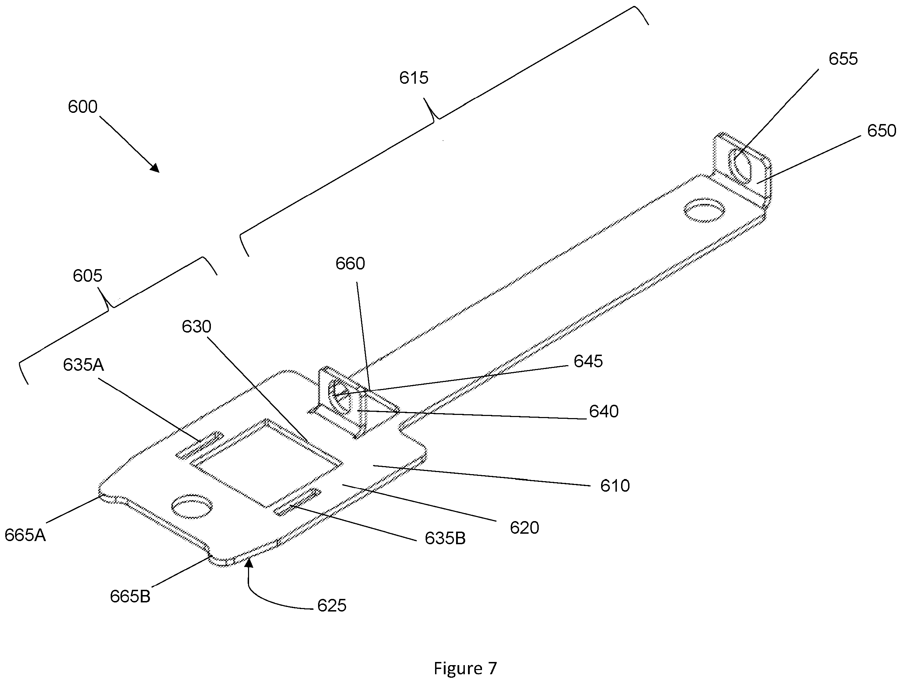

Figure 7 illustrates the carriage 600. The carriage 600 is formed from a pressed steel sheet and is divided into a head 605 and a tail 615. The carriage defines a first surface 620 and an opposing second surface 625.

The head 605 defines the female engagement portion 610 which has a centrally located rectangular hole 630 to receive the male engagement portion 36 of the first subassembly 30. Located on either side of the rectangular hole 630 are apertures 635A, 635B which are configured to interact with the latch 700.

In use, the carriage is supported on the plate 500 with the first surface 620 oriented toward the bottom surface 505 of the plate 500 and the second surface 625 oriented toward the second housing 12B. The female engagement portion 610 is configured to project from the mating end of the second housing 12B to receive and capture the male engagement portion 36 to align the first and second housings 12A, 12B. The carriage 600 is slidably mounted within the gap formed between the plate 500 and the second housing 12B. Sliding the carriage 600 away from the mating end 16 of the second housing 12B draws the mating ends 14, 16 of the respective first 12A and second 12B housings together.

The head 605 of the carriage 600 is approximately twice the width of the tail 615. The head 605 is approximately a third of the length of the tail 615. The head 610 has a first axle mount 640 which extends perpendicular to the first surface 620 of the carriage 600. The first axle mount 640 has an elongate through hole 645. A second axle mount 650 is located at an end of the tail, distal to the head 610, and extends perpendicular to the first surface 620 of the carriage 600. The second axle mount 650 also has an elongate through hole 655. The axle mounts 640, 650 are located along the longitudinal axis of the carriage 600. Both through holes 645, 655 have the same dimensions and are aligned with each other along the longitudinal axis of the carriage 600. The holes 645, 655 are sized to receive and locate the shank 81 of the axle 80. The elongate nature of the holes 645, 655 provides a clearance for the shank to move in a direction transverse to the longitudinal axis of the carriage 600.

The first and second axle mounts 640, 650 are formed by punching and stamping the carriage 600, to form tabs which are then bent perpendicular to the carriage - a recess 660 is formed in the carriage 600 where the first axle mount 640 is foldably removed.

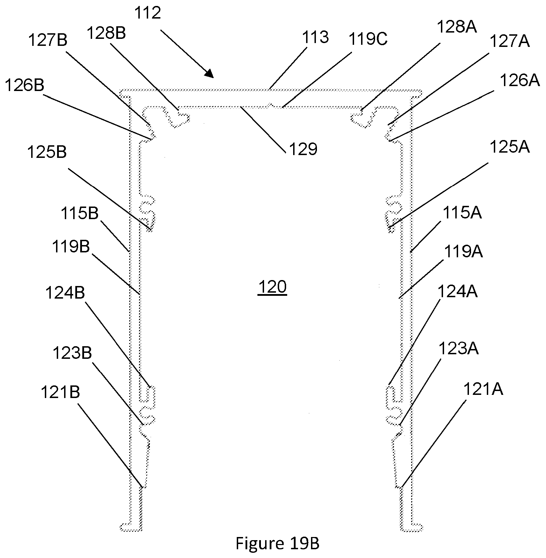

The head 605 has two protrusions 665A, 665B which project in the direction of the first housing 12A, when the second assembly 40 is installed on the second housing 12B. The protrusions 665A, 665B assist in alignment of the female engagement portion 610 with the male engagement portion 36 and the mating end 14 of the housing 12A via a slot 129 (described in relation to Figure 19B).

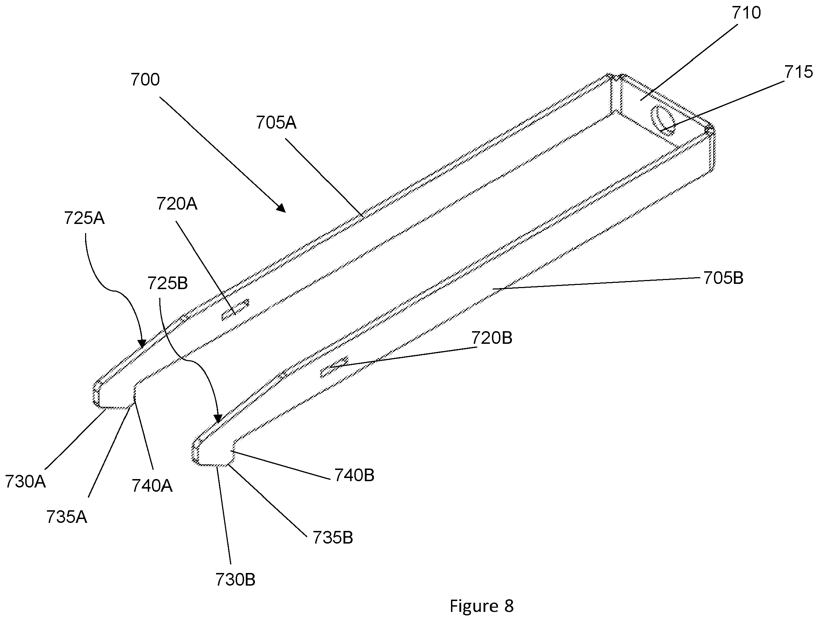

Figure 8 shows the latch 700 which comprises a base 710 and a pair of arms 705A, 705B projecting at right angles from the base 710. The base 710 has a hole 715 sized to receive and locate the shank 81 of the axle 80. Located at distal ends of the latch 700 from the base, is a pair of hook shaped anchors 725A, 725B, one anchor located at the end of each arm 705A, 705B. The anchors 725A, 725B are formed to each provide: a cam surface 730A, 730B; a projecting tip 735A, 735B; and an abutment surface 740A, 740B.

When the second subassembly 40 is primed to receive the male engagement portion 36, the female engagement portion 610 projects from the second end 16 of the second housing 12B. The anchors 725A, 725B project through the respective apertures 635A, 635B of the carriage 600 and the abutment surfaces 740A, 740B latch onto the outer edge of the second housing 12B. This latching action maintains tension in the compression spring 90 and prevents the carriage from being biased towards the second housing 12B. Upon contact between the tips 735A, 735B and the first housing 12B, the anchors 725A, 725B will retract through the respective apertures 635A, 635B and release the abutment surfaces 740A, 740B from the edge of the second housing 12B. This action releases the tension in the compression spring which retracts the carriage 600 into the second housing 12B under a biasing force.

The cam surfaces 730A, 730B of the arms 705A, 705B operate in contrast to the abutment surfaces 740A, 740B. The cam surfaces allow the anchors 725A, 725B to slidably release from the apertures 635A, 635B, when contacted by the first housing 12A.

The arms 705A, 705B also comprises apertures as slots or slotted recesses 720A, 720B for mounting the leaf spring 200.

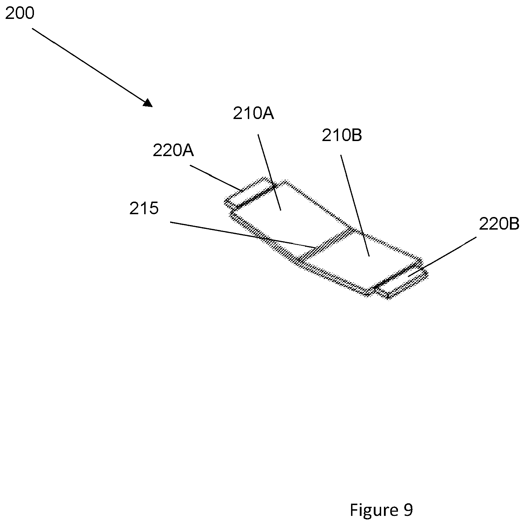

Figure 9 illustrates a latch biasing member in the form of a leaf spring 200. The spring 200 comprises a resilient plate with a central fold 215 forming a v-shaped profile having two halves 210A, 210B. The leaf spring 200 has two mounting tabs 220A, 220B for attachment to arms 705A, 705B of the latch 700. The spring 200 is made from a steel or spring steel.

The spring 200 is mounted via the tabs 220A, 220B to the arms 705A, 705B of the latch 700, illustrated in Figure 3. Each arm of the latch provides a slot or slotted recess 720A, 720 in which the tabs 220A, 220B are received. The v-shaped profile of the spring 200 is oriented such that the fold 215 is pointing toward the carriage 600. Thus, the biasing force of the spring 200 is directed to urge the arms 705A, 705B of the latch 700 towards the carriage 600, forcing the anchors 725A, 725B through the apertures 635A, 635B in the female engagement portion 610.

When the joint between the first 12A and second 12B housings is to be severed, the two housings are pulled away from each other. This action moves the first subassembly 30 relative to the second subassembly 40. In reorienting the two subassemblies 30, 40, the carriage 600 is forced back against the latch 700 which tensions the compression spring 90, effectively recharging the connector. In sliding the carriage 600 along the latch 700, the anchors 725A, 725B of the latch 700 are realigned with the apertures 635A, 635B of the female engagement portion 610, whereby the spring 200 urges the anchors 725A, 725B back through the apertures 635A, 635B, resetting the connector ready for re-engagement.

The steps to assemble the second connector subassembly 40 are as follows:
1) The carriage 600 is inserted underneath the raised central portion 525 of the plate 500. The slot 530 of the plate is sized so that the second axle mount 650 of the carriage 600 can travel along the slot 530 when the carriage 600 is moved relative to the plate 500. This mounts the movable carriage 600 to the plate 500.
2) The mounting tabs 220A, 220B of the leaf spring 200 are inserted into each of the respective apertures 720A, 720B of the latch 700 to attach the leaf spring 200 to the arms 705A, 705B of the latch 700. This mounts the leaf spring 200 to the latch 700.
3) The shank 81 of the axle 80 is threaded (as shown by the dashed line in Figure 5) through the hole 645 in the carriage 600, then through the hole 550 in the plate 500, then through the centre of the spring 90, then through the hole 655 in the carriage 600 and the hole 715 in the latch 700. The flange 82 of the axle 80 is moved into abutment with the first axle mount 640 of the carriage 600. A nut 310c is then threaded onto the reverse side of the base 710 to secure all of the above components together resulting in the second connector subassembly 40.

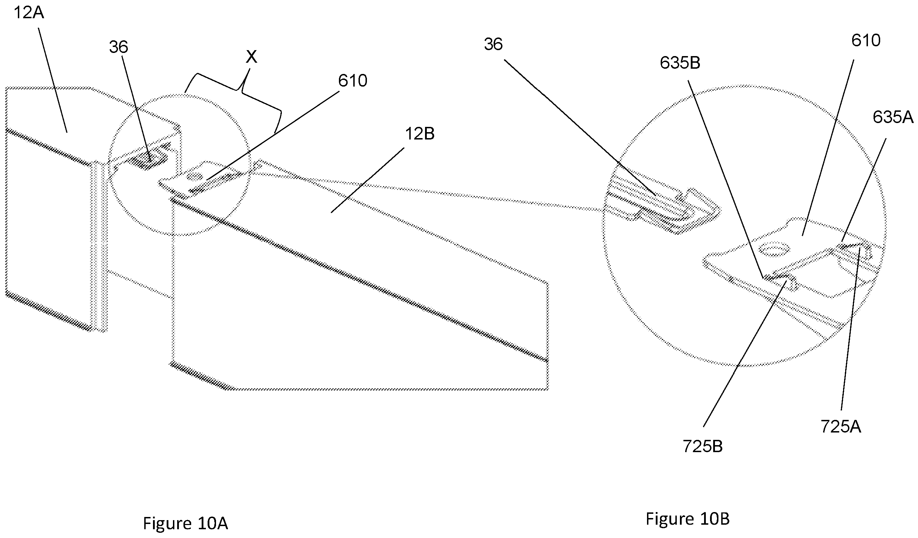

Figures 10-13 illustrate a method of coupling two housings (illustrated as lighting components) in an end-to-end relationship with the self-tensioning connector 20.

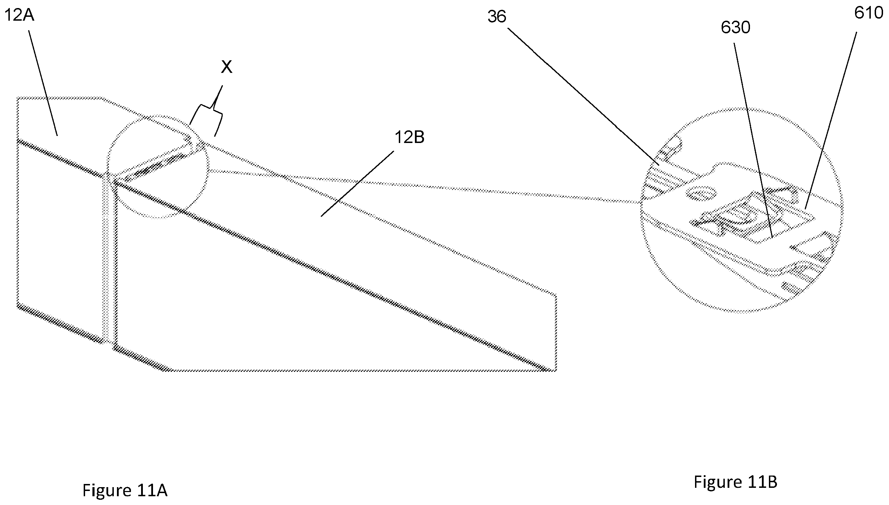

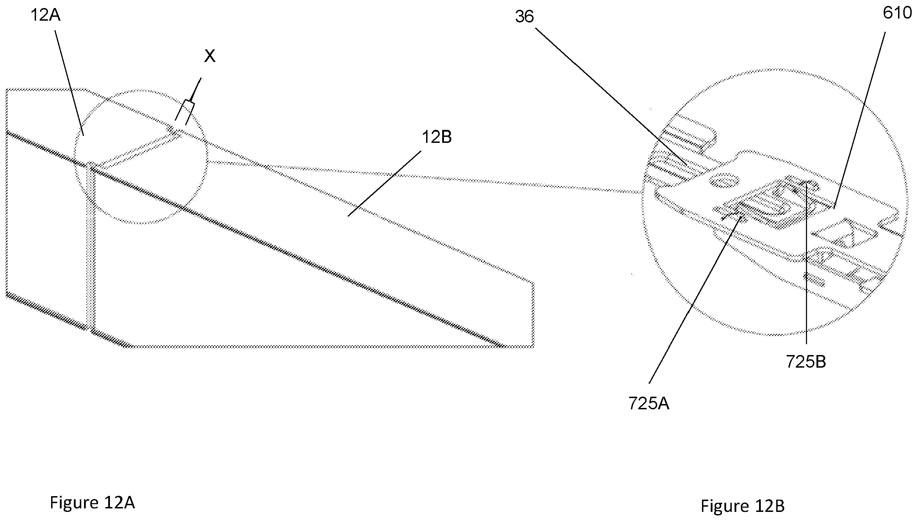

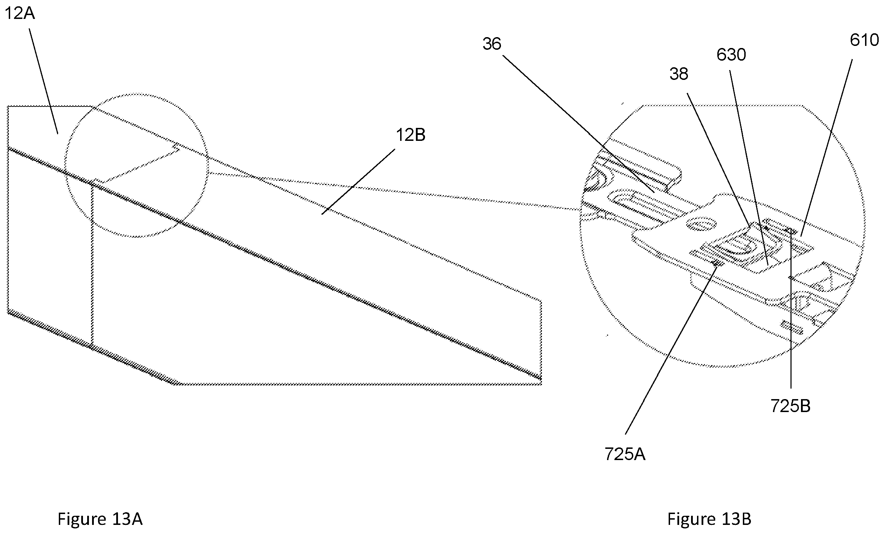

In general terms, the method comprises: a first stage is illustrated in Figures 10A and 10B; a second stage is illustrated in Figures 11A and 11B; a third stage is illustrated in Figures 12A and 12B; and a final fourth stage is illustrated in Figures 13A and 13B.

In the first stage, as shown in Figure 10A, the mating ends of the two housings 12A, 12B are aligned prior to the male engagement portion 36 being received and captured within the female engagement 610 portion. A gap X is formed between the mating ends of the two housings 12A, 12B.

Figure 10B shows an enlarged view of the encircled region of Figure 10A. As can be seen from Figure 10B, the male engagement portion 36 is aligned with the female engagement portion 610 but are not engaged with each other. In this initial stage, the anchors 725A, 725B of latch 700 protrude through the respective apertures 635A, 635B in the carriage 600 and lock against the outer edge of the second housing 12B. In this position, the latch 700 holds tension in the spring 90 preventing the spring from retracting the carriage into the second housing 12B.

The two protrusions 665A, 665B of the head 605 are aligned with the slot 129 of the first housing 12A, to align the first and second housings and to align the male and female engagement portions. The slot 129 can be formed in the extrusion process of creating the housings. Alternatively, where high tolerances are required, the slot 129 can be machined to more accurate, finished dimensions.

In the second stage, as shown in Figure 11A, the ends of the two housings 12A, 12B have been brought closer together. This results in the size of the gap X between the two housings 12A, 12B reducing from that shown in Figure 10A.

Figure 11B shows an enlarged view of the male 36 and female 610 engagement portions in the second stage defined in Figure 11A. As can be seen from Figure 11B, the engagement portion 36 is received and captured within the rectangular recess 630 of female engagement portion 610. The male and female engagement portions are now interconnected.

In the third stage, as shown in Figure 12A, the ends of the two housings 12A, 12B have been brought closer together. The gap X between the two housings 12A, 12B has further reduced in size from that shown in Figure 11A.

Figure 12B shows an enlarged view of the male 36 and female 610 engagement portions in the third stage defined in Figure 12A. As can be seen from Figure 12B, the anchors 725A, 725B are retracted from the respective apertures 635A, 635B immediately prior to their release. This release action releases the anchors 725A, 725B from the carriage on engagement with the edge of the second housing 12B and thereby releases the tension in the compression spring.

In the final stage, as shown in Figure 13A, the ends of the two housings 12A, 12B are brought into contact with each other under the tension of the compression spring and the gap X between the two housings 12A, 12B is closed.

Figure 13B shows an enlarged view of the male 36 and female 610 engagement portions in the final stage defined in Figure 13A (housings removed for ease of view). As shown in Figure 13B, the carriage 600 has retracted within the second housing 12B under spring tension. The movement of the carriage 600 has tensioned the lip 38 of the male engagement portion 36 against an inside surface of the rectangular recess 630 of the female engagement portion 610.

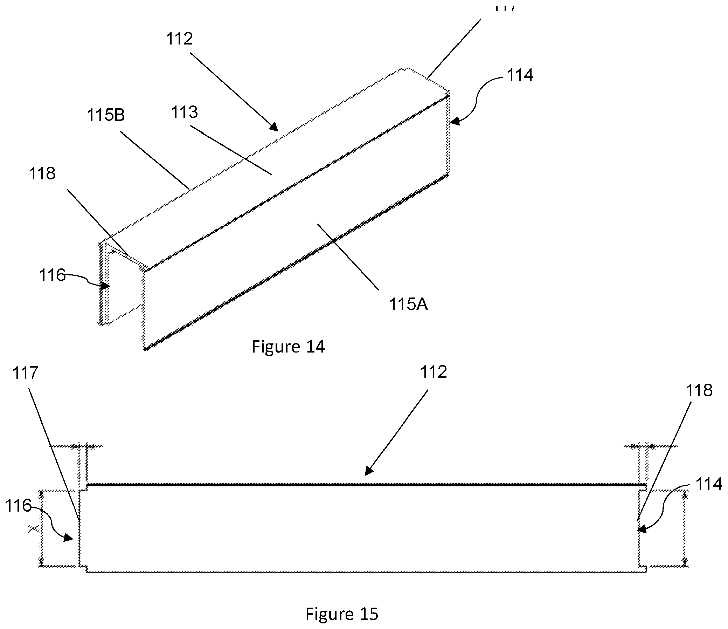

Figures 14 and 15 show a second embodiment of a housing 112. The housing 112 comprises a base 113 with two side walls 115A, 115B extending from the base 113 to form an open C-channel. The base 113 protrudes 117 at first end 114 of the housing 112 and is recessed 118 at the second end 116 of the housing 112. The shape of the protrusion 117 corresponds to the shape of the recess 118, such that when the housings 112 are engaged end-to-end, the ends interleave with one another to form a lap joint between the two housings 112. It has been found that this form of joint reduces the amount of light bleed between the two housings as there is no direct path for light to travel.

The housings 112 are formed into lengths of constant cross-sectional area by an extrusion process. The housings 112 are preferably extruded from aluminium. However, it is also envisaged that a vast number of materials may be suitable for producing the extruded housings 112. Other suitable materials may include: steel; stainless steel; titanium; polyethylene; polypropylene; acetal; acrylic; nylon; polyvinyl chloride; and the like.

The protrusion 117 and recess 118 are formed on the housing 112 by milling the respective ends 114 and 116 of the extrusions for precision and high tolerance. However, it is also envisaged that the protrusion 117 and recess 118 could also be formed in the extrusion process.

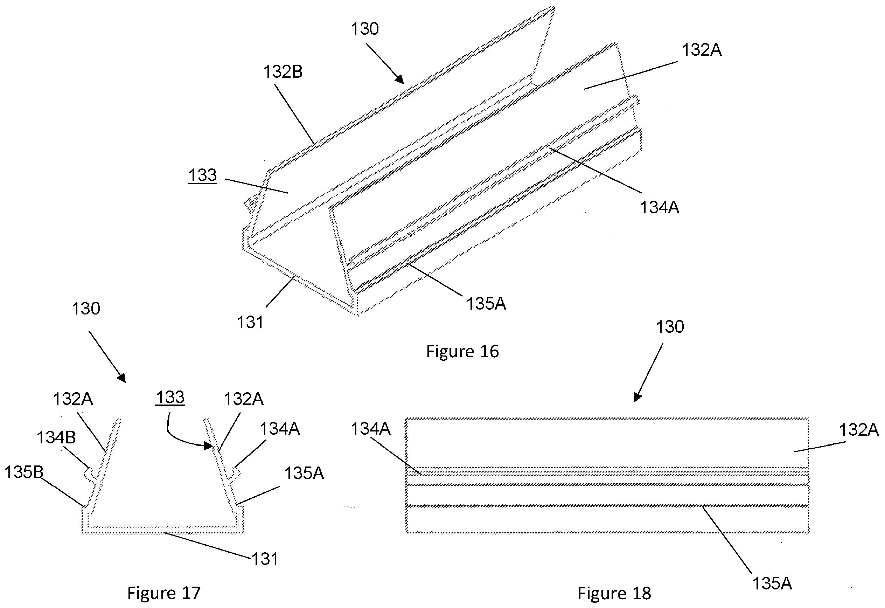

Described in reference to Figures 16-18 is a lens 130. The lens 130 comprises an outwardly facing light transmitting pane 131 flanked by two side walls 132A, 132B defining a U-shaped channel 133.

The light transmitting pane 131 is made from a first material and the two side walls 132A, 132B are made of a second material, wherein the first material is different to the second material in at least one of the following characteristics: colour, transparency, translucency, and opacity. The lens 130 can be extruded or moulded or cast.

The lens 130 can be formed from glass, plastic, Perspex and a variety of opaque, transparent and translucent materials.

Each of the side walls 132A, 132B comprises a resilient attachment member 134A, 134B which projects outwardly from respective side walls 132A, 132B.

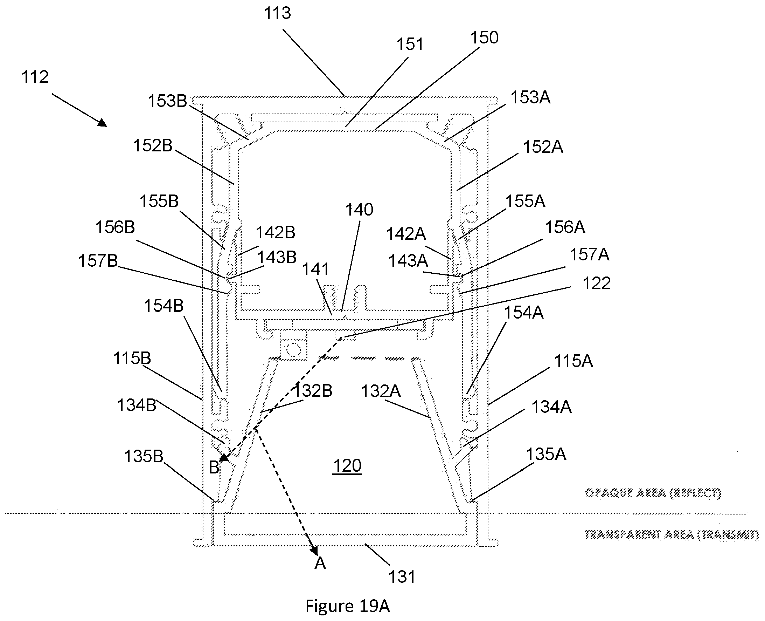

Figure 19A shows the lens 130 installed in a cavity 120 of the housing 112 defined by the base 113 and side walls 115A, 115B. The width of the base 113 is 46 mm and the depth of the walls 115A, 115B are 68 mm.

A light source 122 is mounted inside the cavity 120 and enclosed by the lens 130. The light source 122 is mounted into the cavity 120 on a light source holder 140 which is frictionally secured to the housing 112 via a resilient clip 150.

The resilient clip 150 is an extruded channel formed in lengths which correspond to the length of the housing 112. The resilient clip 150 comprises a body 151 with two arms 152A, 152B projecting from either side of the body to define a generally U-shaped cross-section. The body 151 has a generally horizontal central portion bounded by end portions, which are angled relative to the central portion, forming first shoulders 153A, 153B. The first shoulders 153A, 153B are angled between 10-20 degrees relative to the central portion. Each arm 152A, 152B projects from an end portion of the base and terminates at a tip 154A, 154B.

A distance between the tips 154A, 154B is greater than a distance between the arms at the connection with the base. At a midpoint along each arm 152A, 152B there is an outwardly inclined section forming second shoulders 155A, 155B. The second shoulders are inclined at an angle between 10-20 degrees relative to the respective arm 152A, 152B. On the reverse side of each second shoulder 155A, 155B, facing inwards towards the cavity 120, are longitudinal grooves 156A, 156B. Each arm 152A, 152B gradually increases in thickness in the direction of the body 151, leading towards the opening of the groove 156A, 156B. This increase in thickness forms a cam surface 157A, 157B.

The light source holder 140 is an extruded channel formed in lengths which correspond to the length of the housing 112. The light source holder comprises a body 141 with two legs 142A, 142B projecting perpendicularly from either side of the body 141 to define a generally U-shaped cross-section. Located at a mid-point along each arm is an outwardly projecting rib 143A, 143B which corresponds to the longitudinal groove 156A, 156B on the resilient clip 150. The light source 122 is mounted to the body 141 of the light source holder 140.

The pair of side walls 132A, 132B of the lens 130 extend into the cavity 120 and terminate in close proximity to the light source 122. Attachment members 134A, 134B engage with features on the inner surface of the cavity 120 to frictionally secure the lens 130 within the cavity 120. Edges 135A, 135B of the lens 130 limit the inward movement of the lens 130 into the cavity 120.

When the light source 122 is switched on, light emitted from the light source 122 travels through the U-shaped channel 133 with some of this light reflecting off the side walls 132A, 132B of the lens 130 before being transmitted to an external environment via the light transmitting pane 131 (see arrow A in Figure 19A).

Arrow B of Figure 19A illustrates the light emitted from the light source reflecting off the inner side walls 115A, 115B of the housing 112, if the side walls 132A, 132B were absent.

The applicant has found that the side walls 132A, 132B minimise the amount of light bleed through the gap X between adjoining housings 112. The is because the side walls 132A, 132B are arranged to direct more light from the light source towards the light transmitting pane 131. Therefore, less light radiates outwardly towards the gap X between adjoining housings 112.

If the lens 130 needs to be replaced, it can be released from the housing 112 by prying the lens 130 from the housing 112.

The lens 130 assists in providing a more consistent light output from the light source 122 regardless of the colour of the inner surface of the housing 112. This allows a user to change the colour of the lighting fixture, particularly the housing 112, without affecting the light output. The lens 130 can also be easily installed and uninstalled from the housing 112, installation achieved by clipping the lens 130 into the housing 112, providing an opportunity for installation of different types of similarly-shaped lenses, such as lenses of different colours or translucency.

While the lens 130 has been described in relation to the housing 112, it is also envisaged that the same lens 130 could function with the first and second housings 12A, 12B previously described.

Figure 19B illustrates the housing 112 without the lens 130 or light source 122 mounted within the cavity 120. The side walls 115A, 115B have opposing right and left internal surfaces 119A, 119B which face inwardly towards the cavity 120. The base 113 has an upper internal surface 119C facing inwardly towards the cavity 120. The first and second subassemblies 30, 40 are mounted to the internal surfaces 119C of two respective housings 112.

The right and left internal surfaces 119A, 119B provide opposing lens abutment surfaces 121A, 121B which contact the edges 135A, 135B of the lens 130 respectively, to position the lens 130 within the cavity 120 and prevent the lens 130 from being pushed too far into the cavity, towards the base 113.

Toward the opening of the cavity 120, the right and left internal surfaces 119A, 119B provide L-shaped lower retaining formations 124A, 124B each have a limb which projects towards the upper internal surface 119C. These lower retaining formations 124A, 124B abut the tips of the resilient clip 150 to secure the resilient clip 150 within the cavity 120.

Located on the internal surfaces 119A, 119B, above the lower retaining formations 124A, 124B, are longitudinal grooves 123A, 123B. The grooves 123A, 123B are configured to receive the respective resilient attachment members 134A, 134B of lens 130 to secure said lens 130 within the cavity 120.

At a mid-point along each of the internal surfaces 119A, 119B are L-shaped abutment formations 125A, 125B. These abutment formations 125A, 125B each have a limb which projects towards the opening of the cavity 120. The limbs have a surface facing the cavity 120 that is inclined relative to the respective right and left internal surfaces 119A, 119B.

At the connection between the right and left internal surfaces 119A, 119B and the upper internal surface 119C are chamfers 126A, 126B. The chamfers 126A, 126B each have a threaded hole 127A, 127B which is inclined towards the cavity 120. The threaded holes 127A, 127B act as screw locations for adding fixings to secure the resilient clip 150 in place and for adding electrical grounding (earth points). Each of the chamfers 126A, 126B has a longitudinal channel 128A, 128B which together with the upper internal surface 119C form the slot 129. The slot 129 provides an alignment feature to align the male 36 and female 610 engagement portions. The slot 129 further assists in aligning the protruding carriage 600 with the mating end 14 of the first housing 12A.

To assemble the light fixture, the first 30 or second 40 connector subassembly is first attached to the upper inner surface 119C of the housing 112. The resilient clip 150 is then inserted, body 151 first, into the cavity 120 of the housing 112. The light source holder 140, with light source 122 fitted, is then inserted legs 142A, 142B first into the cavity 120 and between the arms 152A, 152B of the resilient clip 150. By pushing the ribs 143A, 143B of the light source holder 140 along the cam surface 157A, 157B of the resilient clip 150, the arms 152A, 152B of the resilient clip are biased outwards until the tips 154A, 154B abut the respective internal surface 119A, 119B of the housing 112.

The ribs 143A, 143B of the light source holder 140 snap into the respective longitudinal groove 156A, 156B of the resilient clip 150 to secure the light source holder 140 within the resilient clip 150. In this position, the tips 154A, 154B are prevented from moving inwards towards each other by the light source holder 140. Furthermore, the tips 154A, 154B are prevented from moving towards the opening of the cavity 120 by the respective lower retaining formation 124A, 124B. This effectively secures the light source holder 140 within the cavity 120. The first shoulders 153A, 153B of the resilient clip 150 abut the respective chamfer 126A, 126B on the housing 112 and the second shoulders 155A, 155B of the resilient clip 150 abut the respective abutment formation 125A, 125B on the housing 112.

The lens 130 is then inserted into the cavity 120 until the resilient attachment members 134A, 134B snap into the respective groove 123A, 123B in the housing 112. The edges 135A, 135B mate with the respective abutment surface 121A, 121B of the housing and prevent the lens 130 from being pushed too far into the cavity 120, towards the base 113.

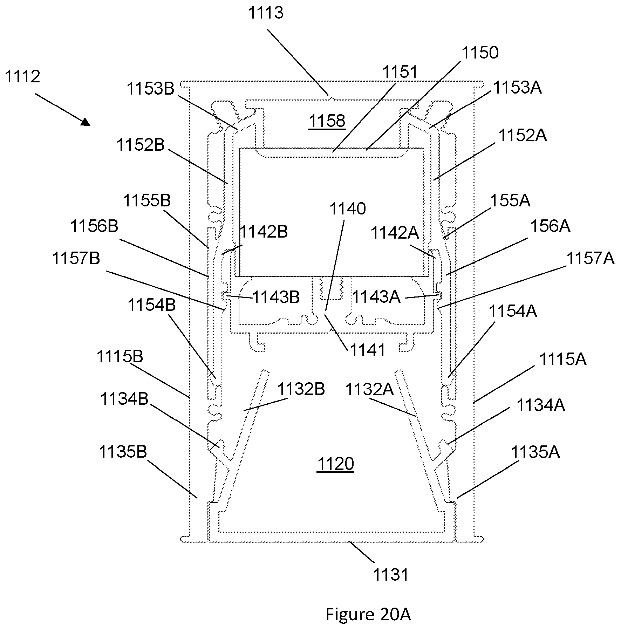

Figure 20A illustrates a lighting fixture 1112 according to another embodiment of the invention, where the similar reference numerals are used to indicate similar features to the embodiment shown in Figure 19A. As can be seen from Figure 20A, the lighting fixture 1112 differs from that shown in Figure 19A in that the body 1151 of the resilient clip 1150 bows inwardly towards the opening of the cavity 1120. This forms a secondary cavity 1158 between the body 1151 of the resilient clip 1150 and the base 1113 of the housing 1112, in which the connector 20 can be packaged.

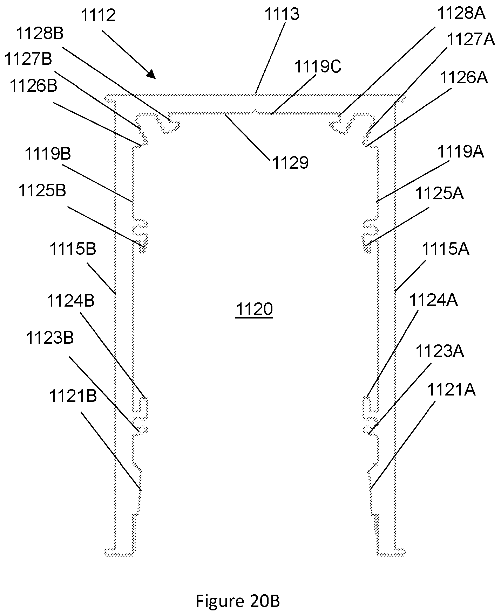

Figure 20B illustrates the housing 1112 of Figure 20A in isolation. In this embodiment, the width of the base 1113 is about 50 mm and the depth of the walls 1115A, 1115B are about 76 mm. The cross-sectional thickness of the housing 1112 is greater than the cross-sectional thickness of the housing 112. However, each of the above dimensions and thicknesses can be adjusted to better suit the lighting requirements desired.

It will be appreciated by persons skilled in the art that numerous variations and modifications may be made to the above-described embodiments, without departing from the scope of the following claims. The present embodiments are, therefore, to be considered in all respects as illustrative of the scope of protection, and not restrictively.

Unless defined otherwise, all technical and scientific terms used herein have the same meaning as commonly understood by one of ordinary skill in the art to which this invention belongs. Although any methods and materials similar or equivalent to those described herein can also be used in the practice or testing of the present invention, a limited number of the example methods and materials are described herein.

It is to be understood that, if any prior art publication is referred to herein, such reference does not constitute an admission that the publication forms a part of the common general knowledge in the art, in Australia or any other country.

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

### Legend

- 12A: : first housing
- 12B: : second housing
- 14: : mating end
- 16: : mating end
- 20: : self-tensioning connector
- 30: : first connector subassembly
- 31: : bracket
- 32: : bottom surface
- 33: : top surface
- 34: : domed section
- 35: : bolt hole
- 36: : male engagement portion
- 37: : tongue
- 38: : lip
- 40: : second connector subassembly
- 80: : axle
- 81: : elongate shank
- 82: : flange
- 90: : compression spring

- 112: : housing
- 113: : base
- 114: : first end
- 115A: : right side wall
- 115B: : left side wall
- 116: : second end
- 117: : protrusion
- 118: : recess
- 120: : cavity
- 121A: : right lens abutment surfaces
- 121B: : left lens abutment surfaces
- 122: : light source
- 123A: : right groove
- 123B: : left groove
- 124A: : right retaining formation
- 124B: : left retaining formation
- 125A: : middle right abutment formation
- 125B: : middle left abutment formation
- 126A: : right chamfer
- 126B: : left chamfer
- 127A: : right threaded hole
- 127B: : left threaded hole
- 128A: : right longitudinal channel
- 128B: : left longitudinal channel
- 130: : lens
- 131: : light transmitting pane
- 132A: : right side wall
- 132B: : left side wall
- 133: : U-shaped channel
- 134A: : right resilient attachment member
- 134B: : left resilient attachment member
- 140: : light source holder
- 141: : body
- 142A: : right leg
- 142B: : left leg
- 143A: : right rib
- 143B: : left rib
- 150: : resilient clip
- 151: : body
- 152A: : right arm
- 152B: : left arm
- 153A: : right first shoulder
- 153B: : left first shoulder
- 154A: : right tip
- 154B: : left tip
- 155A: : right second shoulder
- 155B: : left second shoulder
- 156A: : right longitudinal groove
- 156B: : left longitudinal groove
- 157A: : right cam surface
- 157B: : left cam surface

- 310A: : first fastener
- 310B: : second fastener
- 310C: : nut

- 500: : mounting plate
- 505: : bottom surface
- 510: : top surface
- 515: : first end
- 520: : second end
- 525: : raised central portion
- 530: : rectangular slot
- 535: : domed section
- 540: : bolt hole
- 545: : intermediate axle mount
- 550: : through hole

- 600: : carriage
- 605: : head
- 610: : female engagement portion
- 615: : tail
- 620: : first surface
- 625: : second surface
- 630: : rectangular hole
- 635A: : aperture
- 635B: : aperture
- 640: : first axle mount
- 645: : through hole
- 650: : second axle mount
- 655: : through hole
- 660: : recess
- 665A: : protrusion
- 665B: : protrusion

- 700: : latch
- 705A: : arm
- 705B: : arm
- 710: : base
- 715: : hole
- 720A: : slotted recess
- 720B: : slotted recess
- 725A: : anchor
- 725B: : anchor
- 730A: : cam surface
- 730B: : cam surface
- 735A: : projecting tip
- 735B: : projecting tip
- 740A: : abutment surface
- 740B: : abutment surface

- 1113: : base
- 1115A: : right side wall
- 1115B: : left side wall
- 1120: : cavity
- 1121A: : right lens abutment surfaces
- 1121B: : left lens abutment surfaces
- 1122: : light source
- 1123A: : right groove
- 1123B: : left groove
- 1124A: : right retaining formation
- 1124B: : left retaining formation
- 1125A: : middle right abutment formation
- 1125B: : middle left abutment formation
- 1126A: : right chamfer
- 1126B: : left chamfer
- 1127A: : right threaded hole
- 1127B: : left threaded hole
- 1128A: : right longitudinal channel
- 1128B: : left longitudinal channel
- 1140: : light source holder
- 1141: : body
- 1142A: : right leg
- 1142B: : left leg
- 1143A: : right rib
- 1143B: : left rib
- 1150: : resilient clip
- 1151: : body
- 1152A: : right arm
- 1152B: : left arm
- 1153A: : right first shoulder
- 1153B: : left first shoulder
- 1154A: : right tip
- 1154B: : left tip
- 1155A: : right second shoulder
- 1155B: : left second shoulder
- 1156A: : right longitudinal groove
- 1156B: : left longitudinal groove
- 1157A: : right cam surface
- 1157B: : left cam surface
- 1158: : cavity

## Claims

1. A self-tensioning connector (20) for coupling mating ends (14,16) of a first housing (12A) and a second
housing (12B) in a linear configuration, the connector (20) providing first and second cooperating subassemblies (30,40) for fixedly mounting to the first and second housings (12A,12B) respectively,
the first subassembly (30) mountable to the first housing (12A) and having a male engagement portion (36) configured to project from the mating end (14) of the first housing (12A) when mounted thereto,
the second subassembly (40) comprising:
a plate (500) mountable to the second housing (12B);
a moveable carriage (600) supported on the plate (500), the carriage (600) having a female engagement portion (610) configured to project from the mating end (16) of the second housing (12B) to receive and capture the male engagement portion (36) and align the first and second housings (12A,12B); and
a latch (700) mounted on and biased against the movable carriage (600) in a tensioned configuration, the latch (700) providing an anchor (725A,725B) configured to extend through an aperture (635A,635B) in the carriage (600),
wherein engagement of the male and female engagement portions (36,610) aligns the first and second subassemblies (30,40) thereby aligning the first and second housings (12A, 12B), and
movement of the two housings (12A,12B) towards one another brings the first housing (12A) into contact with the anchor (725A,725B) releasing the anchor (725A,725B) from the aperture (635A,635B) and allowing the biasing means (90) to force the carriage (600) away from the mating end (16) of the second housing (12B) to adopt an engaged configuration drawing the mating ends (14,16) of the first and second housings (12A,12B) together.

2. The self-tensioning connector (20) according to claim 1, wherein movement of the carriage (600) relative to the plate (500) retracts both the male and the female engagement portions (36,610) into the second housing (12B) thereby tensioning the mating end (14) of the first housing (12A) against the mating end (16) of the second housing (12B).

3. The self-tensioning connector (20) according to claim 1 or claim 2, wherein the latch (700) comprises a base (710) having a pair of arms (705A,705B) projecting from the (710), and an anchor (725A,725B) located at an end of each of the respective arms (705A,705B) which is distal from the base (710).

4. The self-tensioning connector (20) according to any one of the preceding claims, wherein the latch (700) is biased against the movable carriage (600) by a resilient member (200).

5. The self-tensioning connector (20) according to any one of the preceding claims, wherein the carriage (600), the latch (700) and the plate (500) are coaxially aligned about a longitudinal axis.

6. The self-tensioning connector (20) according to any one of the preceding claims, wherein
the carriage (600) comprises a first and a second axle mount (640,650), spaced apart and aligned with the longitudinal axis.

7. The self-tensioning connector (20) according to claim 6, wherein a first end of the plate (500) includes an intermediate axle mount (545) and a translatable axle extending through each of the first, second and intermediate axle mounts, and wherein a compressible spring (90) is mounted on the axle (80) between the first axle mount (640) and the intermediate axle mount (545), such that compression and expansion of the compressible spring (90) varies the location of the carriage (600) relative to the plate (500).

8. The self-tensioning connector (20) according to any one of the preceding claims, wherein the latch (700) is movably mounted to the axle to transition between a first and a second position; the first position wherein the anchors (725A,725B) of the latch (700) are engaged with the carriage; and the second position wherein the anchors (725A,725B) of the latch (700) are disengaged from the carriage.

9. The self-tensioning connector (20) according to any one of the preceding claims, including a latch biasing member (200) to bias the latch (700) towards the first position.

10. A lighting system comprising a self-tensioning connector (20) according to any one of claims 1-9.

11. The lighting system according to claim 10, comprising a first housing (12A) and a second housing (12B), each housing having an open cavity (120) for receiving at least one light source (122), a lens, and at least one of a first and a second subassembly (30,40) of the self-tensioning connector (20) for coupling mating ends (14,16) of the first and second housings (12A,12B) in a linear configuration, wherein:
the first subassembly (30) mountable to the first housing (12A), and having a male engagement portion (36) configured to project from the mating end (14) of the first housing (12A) when mounted thereto; and
the second subassembly (40) comprises:
a plate (500) mountable to the second housing (12B);
a moveable carriage (600) supported on the plate (500) the carriage (600) having a female engagement portion (610) configured to project from the mating end (16) of the second housing (12B) to receive and capture the male engagement portion (36) to align the first and second housings (12A, 12B); and
a latch (700) mounted on and biased against the movable carriage (600) in a tensioned configuration, the latch (700) providing an anchor (725A,725B) configured to extend through an aperture (635A,635B) in the carriage (600), wherein engagement of the male and female engagement portions (36,610) aligns the first and second subassemblies (30,40) thereby aligning the first and second housings (12A,12B) and
movement of the two housings (12A,12B) towards one another brings the first housing (12A) into contact with the anchor (725A,725B) releasing the anchor (725A,725B) from the aperture (635A,635B) and allowing the biasing means (90) to force the carriage (600) away from the mating end (16) of the second housing (12B) to adopt an engaged configuration drawing the mating ends (14,16) of the first and second housings (12A,12B) together.

12. The lighting system according to claim 11, wherein the lens (130) comprises: an open channel with a light transmitting pane (131), and the open channel is resiliently engaged in the open cavity (120) of the housing.

13. The lighting system according to either claim 11 or 12, wherein the open channel comprises a pair of side walls (132A,132B) that extend into the cavity and terminate in close proximity to the light source (122).

14. The lighting system according to any one of claims 11 to 13, wherein the lens (130) is entirely housed within the cavity (120).

15. The lighting system according to any one of claims 11 to 14, wherein the opposing ends of each of the first and the second housings (12A,12B) is either recessed or protruding to interleave with one another on engagement.

## Patentansprüche

1. Selbstspannender Verbinder (20) zum Koppeln passender Enden (14, 16) eines ersten Gehäuses (12A) und eines zweiten Gehäuses (12B) in einer linearen Konfiguration, wobei der Verbinder (20) erste und zweite kooperierende Unterbaugruppen (30, 40) zum festen Befestigen an dem ersten bzw. dem zweiten Gehäuse (12A, 12B) bereitstellt, wobei die erste Unterbaugruppe (30) an dem ersten Gehäuse (12A) befestigbar ist und einen Stecker-Eingriffsabschnitt (36) aufweist, der dazu konfiguriert ist, aus dem passenden Ende (14) des ersten Gehäuses (12A) herauszuragen, wenn er daran befestigt ist, wobei die zweite Unterbaugruppe (40) Folgendes umfasst:
eine Platte (500), die an dem zweiten Gehäuse (12B) befestigbar ist;
einen bewegbaren Wagen (600), der auf der Platte (500) gelagert ist, wobei der Wagen (600) einen Buchsen-Eingriffsabschnitt (610) aufweist, der dazu konfiguriert ist, aus dem passenden Ende (16) des zweiten Gehäuses (12B) herauszuragen, um den Stecker-Eingriffsabschnitt (36) aufzunehmen und zu erfassen und das erste und das zweite Gehäuse (12A, 12B) auszurichten; und
eine Verriegelung (700), die auf dem bewegbaren Wagen (600) befestigt und in einer gespannten Konfiguration gegen diesen vorgespannt ist, wobei die Verriegelung (700) einen Anker (725A, 725B) bereitstellt, der dazu konfiguriert ist, sich durch eine Öffnung (635A, 635B) in dem Wagen (600) zu erstrecken,
wobei das Ineinandergreifen des Stecker- und des Buchsen-Eingriffsabschnitts (36, 610) die erste und die zweite Unterbaugruppe (30, 40) ausrichtet und dadurch das erste und das zweite Gehäuse (12A, 12B) ausrichtet und eine Bewegung der zwei Gehäuse (12A, 12B) aufeinander zu das erste Gehäuse (12A) in Kontakt mit dem Anker (725A, 725B) bringt, wodurch der Anker (725A, 725B) aus der Öffnung (635A, 635B) freigegeben und es dem Vorspannmittel (90) ermöglicht wird, den Wagen (600) von dem passenden Ende (16) des zweiten Gehäuses (12B) wegzudrängen, um eine in Eingriff stehende Konfiguration zu übernehmen, die die passenden Enden (14, 16) des ersten und des zweiten Gehäuses (12A, 12B) zusammenzieht.

2. Selbstspannender Verbinder (20) nach Anspruch 1, wobei die Bewegung des Wagens (600) in Bezug auf die Platte (500) sowohl den Stecker- als auch den Buchsen-Eingriffsabschnitt (36, 610) in das zweite Gehäuse (12B) zurückzieht und dadurch das passende Ende (14) des ersten Gehäuses (12A) gegen das passende Ende (16) des zweiten Gehäuses (12B) spannt.

3. Selbstspannender Verbinder (20) nach Anspruch 1 oder Anspruch 2, wobei die Verriegelung (700) eine Basis (710), die ein Paar Arme (705A, 705B) aufweist, die aus der (710) herausragen, und einen Anker (725A, 725B), der sich an einem Ende eines jeden der jeweiligen Arme (705A, 705B) befindet, das distal von der Basis (710) ist, umfasst.

4. Selbstspannender Verbinder (20) nach einem der vorhergehenden Ansprüche, wobei die Verriegelung (700) mit einem elastischen Element (200) gegen den bewegbaren Wagen (600) vorgespannt ist.

5. Selbstspannender Verbinder (20) nach einem der vorhergehenden Ansprüche, wobei der Wagen (600), die Verriegelung (700) und die Platte (500) koaxial um eine Längsachse ausgerichtet sind.

6. Selbstspannender Verbinder (20) nach einem der vorhergehenden Ansprüche, wobei der Wagen (600) eine erste und eine zweite Achsbefestigung (640, 650) umfasst, die voneinander beabstandet und mit der Längsachse ausgerichtet sind.

7. Selbstspannender Verbinder (20) nach Anspruch 6, wobei ein erstes Ende der Platte (500) eine Zwischenachsbefestigung (545) und eine verschiebbare Achse, die sich durch jede der ersten, zweiten und Zwischenachsbefestigungen erstreckt, beinhaltet und wobei eine komprimierbare Feder (90) an der Achse (80) zwischen der ersten Achsbefestigung (640) und der Zwischenachsbefestigung (545) derart befestigt ist, dass eine Komprimierung und Expansion der komprimierbaren Feder (90) den Ort des Wagens (600) in Bezug auf die Platte (500) verändert.

8. Selbstspannender Verbinder (20) nach einem der vorhergehenden Ansprüche, wobei die Verriegelung (700) bewegbar an der Achse befestigt ist, um zwischen einer ersten und einer zweiten Position zu wechseln; die erste Position, wobei die Anker (725A, 725B) der Verriegelung (700) in Eingriff mit dem Wagen stehen; und die zweite Position, wobei die Anker (725A, 725B) der Verriegelung (700) nicht mit dem Wagen in Eingriff stehen.

9. Selbstspannender Verbinder (20) nach einem der vorhergehenden Ansprüche, der ein die Verriegelung vorspannendes Element (200) beinhaltet, um die Verriegelung (700) in Richtung der ersten Position vorzuspannen.

10. Beleuchtungssystem umfassend einen selbstspannenden Verbinder (20) nach einem der Ansprüche 1-9.

11. Beleuchtungssystem nach Anspruch 10, umfassend ein erstes Gehäuse (12A) und ein zweites Gehäuse (12B), wobei jedes Gehäuse einen offenen Hohlraum (120) zum Aufnehmen mindestens einer Lichtquelle (122), einer Linse und mindestens einer von einer ersten und einer zweiten Unterbaugruppe (30, 40) des selbstspannenden Verbinders (20) zum Koppeln passender Enden (14, 16) des ersten und des zweiten Gehäuses (12A, 12B) in einer linearen Konfiguration umfasst, wobei:
die erste Unterbaugruppe (30) an dem ersten Gehäuse (12A) befestigbar ist und einen Stecker-Eingriffsabschnitt (36) aufweist, der dazu konfiguriert ist, aus dem passenden Ende (14) des ersten Gehäuses (12A) herauszuragen, wenn er daran befestigt ist; und
die zweite Unterbaugruppe (40) Folgendes umfasst:
eine Platte (500), die an dem zweiten Gehäuse (12B) befestigbar ist;
einen bewegbaren Wagen (600), der auf der Platte (500) gelagert ist, wobei der Wagen (600) einen Buchsen-Eingriffsabschnitt (610) aufweist, der dazu konfiguriert ist, aus dem passenden Ende (16) des zweiten Gehäuses (12B) herauszuragen, um den Stecker-Eingriffsabschnitt (36) aufzunehmen und zu erfassen, um das erste und das zweite Gehäuse (12A, 12B) ausrichten; und
eine Verriegelung (700), die auf dem bewegbaren Wagen (600) befestigt und in einer gespannten Konfiguration gegen diesen vorgespannt ist, wobei die Verriegelung (700) einen Anker (725A, 725B) bereitstellt, der dazu konfiguriert ist, sich durch eine Öffnung (635A, 635B) in dem Wagen (600) zu erstrecken,
wobei das Ineinandergreifen des Stecker- und des Buchsen-Eingriffsabschnitts (36, 610) die erste und die zweite Unterbaugruppe (30, 40) ausrichtet und dadurch das erste und das zweite Gehäuse (12A, 12B) ausrichtet und eine Bewegung der zwei Gehäuse (12A, 12B) aufeinander zu das erste Gehäuse (12A) in Kontakt mit dem Anker (725A, 725B) bringt, wodurch der Anker (725A, 725B) aus der Öffnung (635A, 635B) freigegeben und es dem Vorspannmittel (90) ermöglicht wird, den Wagen (600) von dem passenden Ende (16) des zweiten Gehäuses (12B) wegzudrängen, um eine in Eingriff stehende Konfiguration zu übernehmen, die die passenden Enden (14, 16) des ersten und des zweiten Gehäuses (12A, 12B) zusammenzieht.

12. Beleuchtungssystem nach Anspruch 11, wobei die Linse (130) Folgendes umfasst:
einen offenen Kanal mit einer Lichtübertragungsscheibe (131), und wobei der offene Kanal in federndem Eingriff mit dem offenen Hohlraum (120) des Gehäuses steht.

13. Beleuchtungssystem nach Anspruch 11 oder 12, wobei der offene Kanal ein Paar Seitenwände (132A, 132B) umfasst, die sich in den Hohlraum erstrecken und in unmittelbarer Nähe der Lichtquelle (122) enden.

14. Beleuchtungssystem nach einem der Ansprüche 11 bis 13, wobei die Linse (130) vollständig in dem Hohlraum (120) eingehaust ist.

15. Beleuchtungssystem nach einem der Ansprüche 11 bis 14, wobei die gegenüberliegenden Enden eines jeden des ersten und des zweiten Gehäuses (12A, 12B) entweder vertieft oder hervorstehend sind, um sich beim Ineinandergreifen zu verzahnen.

## Revendications

1. Raccord autotendeur (20) pour coupler des extrémités d'aboutement (14, 16) d'un premier boîtier (12A) et d'un second boîtier (12B) dans une configuration linéaire, le raccord (20) fournissant des premier et second sous-ensembles coopérants (30, 40) destinés à être montés de manière fixe sur les premier et second boîtiers (12A, 12B) respectivement, le premier sous-ensemble (30) pouvant être monté sur le premier boîtier (12A) et ayant une partie de mise en prise mâle (36) configurée pour faire saillie depuis l'extrémité d'aboutement (14) du premier boîtier (12A) lorsqu'elle y est montée, le second sous-ensemble (40) comprenant :
une plaque (500) pouvant être montée sur le second boîtier (12B) ;
un chariot mobile (600) supporté sur la plaque (500), le chariot (600) ayant une partie de mise en prise femelle (610) configurée pour faire saillie depuis l'extrémité d'aboutement (16) du second boîtier (12B) pour recevoir et capturer la partie de mise en prise mâle (36) et aligner les premier et second boîtiers (12A, 12B) ;
et un verrou (700) monté sur le chariot mobile (600) et sollicité contre celui-ci dans une configuration tendue, le verrou (700) fournissant un ancrage (725A, 725B) configuré pour s'étendre à travers une ouverture (635A, 635B) dans le chariot (600),
dans lequel la mise en prise des parties de mise en prise mâle et femelle (36, 610) aligne les premier et second sous-ensembles (30, 40) alignant ainsi les premier et second boîtiers (12A, 12B), et le mouvement des deux boîtiers (12A, 12B) l'un vers l'autre amène le premier boîtier (12A) en contact avec l'ancrage (725A, 725B) libérant l'ancrage (725A, 725B) de l'ouverture (635A, 635B) et permettant au moyen de sollicitation (90) de forcer le chariot (600) à s'éloigner de l'extrémité d'aboutement (16) du second boîtier (12B) pour adopter une configuration engagée rapprochant les extrémités d'aboutement (14, 16) des premier et second boîtiers (12A, 12B).

2. Raccord autotendeur (20) selon la revendication 1, dans lequel le mouvement du chariot (600) par rapport à la plaque (500) rétracte à la fois les parties de mise en prise mâle et femelle (36, 610) dans le second boîtier (12B), mettant ainsi sous tension l'extrémité d'aboutement (14) du premier boîtier (12A) contre l'extrémité d'aboutement (16) du second boîtier (12B).

3. Raccord autotendeur (20) selon la revendication 1 ou la revendication 2, dans lequel le verrou (700) comprend une base (710) ayant une paire de bras (705A, 705B) faisant saillie de celle-ci (710), et un ancrage (725A, 725B) situé à une extrémité de chacun des bras respectifs (705A, 705B) distale par rapport à la base (710).

4. Raccord autotendeur (20) selon l'une quelconque des revendications précédentes, dans lequel le verrou (700) est sollicité contre le chariot mobile (600) par un élément élastique (200).

5. Raccord autotendeur (20) selon l'une quelconque des revendications précédentes, dans lequel le chariot (600), le verrou (700) et la plaque (500) sont alignés de manière coaxiale autour d'un axe longitudinal.

6. Raccord autotendeur (20) selon l'une quelconque des revendications précédentes, dans lequel le chariot (600) comprend un premier et un second support d'essieu (640, 650), espacés l'un de l'autre et alignés avec l'axe longitudinal.

7. Raccord autotendeur (20) selon la revendication 6, dans lequel une première extrémité de la plaque (500) inclut un support d'essieu intermédiaire (545) et un essieu pouvant effectuer une translation s'étendant à travers chacun des premier, second et intermédiaire supports d'essieu, et dans lequel un ressort compressible (90) est monté sur l'essieu (80) entre le premier support d'essieu (640) et le support d'essieu intermédiaire (545), de sorte que la compression et l'expansion du ressort compressible (90) fassent varier l'emplacement du chariot (600) par rapport à la plaque (500).

8. Raccord autotendeur (20) selon l'une quelconque des revendications précédentes, dans lequel le verrou (700) est monté de manière mobile sur l'essieu pour effectuer une transition entre une première et une seconde position ; la première position dans laquelle les ancrages (725A, 725B) du verrou (700) sont en prise avec le chariot ; et la seconde position dans laquelle les ancrages (725A, 725B) du verrou (700) sont désengagés du chariot.

9. Raccord autotendeur (20) selon l'une quelconque des revendications précédentes, incluant un élément de sollicitation de verrou (200) pour solliciter le verrou (700) vers la première position.

10. Système d'éclairage comprenant un raccord autotendeur (20) selon l'une quelconque des revendications 1 à 9.

11. Système d'éclairage selon la revendication 10, comprenant un premier boîtier (12A) et un second boîtier (12B), chaque boîtier ayant une cavité ouverte (120) pour recevoir au moins une source lumineuse (122), une lentille, et au moins l'un d'un premier et d'un second sous-ensemble (30, 40) du raccord autotendeur (20) pour coupler des extrémités d'aboutement (14, 16) des premier et second boîtiers (12A, 12B) dans une configuration linéaire, dans lequel :
le premier sous-ensemble (30) peut être monté sur le premier boîtier (12A), et ayant une partie de mise en prise mâle (36) configurée pour faire saillie depuis l'extrémité d'aboutement (14) du premier boîtier (12A) lorsqu'elle y est montée ; et
le second sous-ensemble (40) comprend :
une plaque (500) pouvant être montée sur le second boîtier (12B) ;
un chariot mobile (600) supporté sur la plaque (500), le chariot (600) ayant une partie de mise en prise femelle (610) configurée pour faire saillie depuis l'extrémité d'aboutement (16) du second boîtier (12B) pour recevoir et capturer la partie de mise en prise mâle (36) afin d'aligner les premier et second boîtiers (12A, 12B) ; et un verrou (700) monté sur le chariot mobile (600) et sollicité contre celui-ci dans une configuration tendue, le verrou (700) fournissant un ancrage (725A, 725B) configuré pour s'étendre à travers une ouverture (635A, 635B) dans le chariot (600),
dans lequel la mise en prise des parties de mise en prise mâle et femelle (36, 610) aligne les premier et second sous-ensembles (30, 40) alignant ainsi les premier et second boîtiers (12A, 12B) et
le mouvement des deux boîtiers (12A, 12B) l'un vers l'autre amène le premier boîtier (12A) en contact avec l'ancrage (725A, 725B) libérant l'ancrage (725A, 725B) de l'ouverture (635A, 635B) et permettant au moyen de sollicitation (90) de forcer le chariot (600) à s'éloigner de l'extrémité d'aboutement (16) du second boîtier (12B) pour adopter une configuration engagée rapprochant les extrémités d'aboutement (14, 16) des premier et second boîtiers (12A, 12B).

12. Système d'éclairage selon la revendication 11, dans lequel la lentille (130) comprend :
un canal ouvert avec un panneau de transmission de lumière (131), et le canal ouvert est engagé de manière élastique dans la cavité ouverte (120) du boîtier.

13. Système d'éclairage selon soit la revendication 11, soit la revendication 12, dans lequel le canal ouvert comprend une paire de parois latérales (132A, 132B) qui s'étendent dans la cavité et se terminent à proximité immédiate de la source lumineuse (122).

14. Système d'éclairage selon l'une quelconque des revendications 11 à 13, dans lequel la lentille (130) est entièrement logée à l'intérieur de la cavité (120).

15. Système d'éclairage selon l'une quelconque des revendications 11 à 14, dans lequel les extrémités opposées de chacun des premier et second boîtiers (12A, 12B) sont soit en retrait, soit saillantes pour s'imbriquer les unes dans les autres lors de l'engagement.
